# EUROPEAN PATENT APPLICATION

(11) **EP 4 086 535 A1**
(43) Date of publication of application: **09.11.2022**
(21) Application number: 22171414.0
(22) Date of filing: 03.05.2022
(51) Int. Cl.: F25B 5/02, F25B 49/02, F25B 41/24, F25B 41/48

(54) **HEAT PUMP**

(30) Priority: 04.05.2021 IT 202100011366
(71) Applicant: Rhoss S.p.A., 33033 Codroipo (UD) (IT)
(72) Inventor: CASELLI, Francesco, 47122 Forlì (FC) (IT); MILANESE, Francesco, 33033 CODROIPO (UD) (IT); TANTIN, Alberto, 33033 CODROIPO (UD) (IT); PETRACCO, Michele, 33033 CODROIPO (UD) (IT); PRENDIN, Leonardo, 33033 CODROIPO (UD) (IT)
(74) Representative: Studio Torta S.p.A.

(57) **Abstract**

A heat pump comprising a condenser assembly (7), a single expansion valve (9) connected to the outlet of the condenser assembly (7), and an evaporator assembly (4) having finned coils (5a-5d) connected in parallel to the outlet (9a) of the expansion valve (9) through respective ducts (17a-17d), and ventilation means (10) for forced ventilation of the finned coils (5a-5d). At least a first finned coil (5a) is arranged so as to receive a reference air flow rate, and at least a second finned coil (5c) is arranged so as to receive an air flow rate lower than the reference air flow rate. The heat pump (1) has at least two sensors (14, 15) for measuring two respective temperatures (Ta, Tc) of the refrigerant fluid at the outlet of the first finned coil (5a) and at the outlet of the second finned coil (5c), respectively. Only the duct (17c) of the second finned coil (5c) is provided with a flow control valve (16). The heat pump (1) has an electronic control unit (18) configured to control the flow control valve (16) as a function of the two temperatures (Ta, Tc).

## Description

### CROSS-REFERENCE TO RELATED APPLICATIONS

This Patent Application claims priority from Italian Patent Application No. 102021000011366 filed on May 4 2021.

### TECHNICAL FIELD OF THE INVENTION

The present invention relates to a heat pump, and in particular an air-water heat pump.

### STATE OF THE ART

As is known, an air-water heat pump comprises a circuit in which a refrigerant fluid circulates, on which a refrigeration cycle is carried out. The circuit comprises, in the following order defined by the direction of circulation of the refrigerant fluid, an evaporator assembly, which is designed to absorb heat from the air by evaporation of the refrigerant fluid and comprises one or more heat exchangers (finned coils), a compressor for compressing the refrigerant fluid, a condenser assembly, which comprises at least one heat exchanger for transferring heat from the refrigerant fluid to a second fluid, in this case water, and at least one expansion or throttling valve, which is connected to the inlet of the evaporator assembly to reduce the pressure of the refrigerant fluid before it enters the finned coils. The heat pump includes ventilation means for forced ventilation of the finned coils. The refrigerant fluid is in the superheated steam phase at the outlet of the evaporator assembly, in the liquid phase at the inlet of the expansion valve, whereas it is composed of two phases, liquid and gaseous, at the outlet of the expansion valve.

If the evaporator assembly comprises several finned coils, the latter are connected in parallel with each other, and typically, the circuit comprises as many expansion or throttling valves as the number of finned coils.

Each expansion valve is connected in series to a respective finned coil. The expansion valve inlets are connected to the duct coming from the condenser assembly by means of one or more T-connectors. In this way, the refrigerant fluid is distributed to the expansion valves when it is in the liquid phase and therefore it is substantially certain that the flow of the refrigerant fluid is divided into substantially equal parts and then fed in equal quantities to the finned coils, thus ensuring correct operation of the air-water heat pump.

However, an air-water heat pump having a plurality of expansion valves is more expensive and/or more complex to install and calibrate than one having a single expansion valve.

Expansion valves can be electronic or mechanical. The former ones are more expensive and would also require an expensive electronic control system, and the latter must be calibrated individually once installed and produce optimal operation of the air-water heat pump within a narrower flow range.

The most immediate solution to overcome the above drawbacks would be to adopt a single expansion valve and connect its outlet to the various finned coils through one or more T-connectors. With this configuration, the refrigerant fluid is fed to the finned coils when it is in the two - liquid and gaseous - phases and therefore there is no certainty that the flow of refrigerant fluid will be divided into equal quantities among the finned coils. Moreover, in order to have a reasonable certainty of supplying an identical flow rate of refrigerant fluid in the two - liquid and gaseous - phases, it is important that the finned coils are identical from the mechanical point of view and operate in an identical manner from the heat exchange point of view.

However, it often happens that one finned coil can have a worse heat exchange than the others due to external causes, for example an object hindering the flow of air passing through the finned coil, or for structural reasons known in the design phase. For example, in order to save space, it is preferred to have many small finned coils arranged in adjacent pairs, wherein the finned coils of each pair are arranged in a V.

In the particular case of two pairs of adjacent finned coils, the two internal finned coils form a ventilation channel which limits the air flow rate and could reduce the heat exchange of at least one of the two internal finned coils compared to the two external finned coils. In this situation, at the outlet of the finned coil having a lower heat exchange than the others, the refrigerant fluid could be in the gaseous and liquid phases instead of being in the superheated steam phase, and consequently, the other finned coils could be in an excessively superheated steam phase. High overheating also worsens the heat exchange of finned coils which in themselves would not have problems of air flow received, thus lowering the average evaporation temperature of all the finned coils and the overall efficiency of the air-water heat pump.

### SUBJECT AND SUMMARY OF THE INVENTION

The object of the present invention is to provide an air-water heat pump, which is free from the drawbacks described above and, at the same time, is easy and inexpensive to manufacture.

In accordance with the present invention, an air-water heat pump is provided as defined in the appended claims.

### BRIEF DESCRIPTION OF THE DRAWINGS

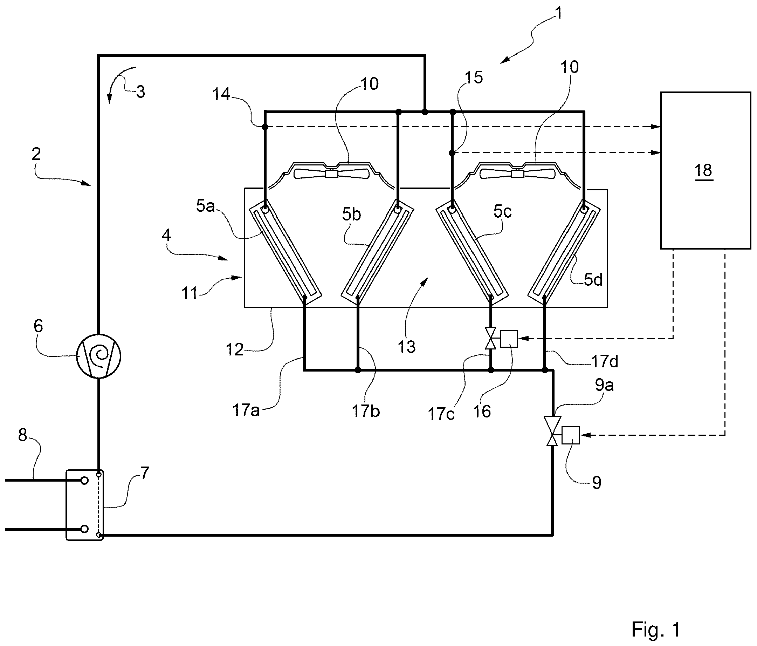

The present invention will now be described with reference to the attached single figure, which illustrates a non-limiting embodiment thereof.

### DETAILED DESCRIPTION OF PREFERRED EMBODIMENTS OF THE INVENTION

Number 1 in the figure indicates a heat pump as a whole, in particular an air-water heat pump, which comprises a circuit 2 in which a refrigerant fluid circulates, in a circulation direction 3, on which a refrigeration cycle is performed.

The circuit 2 comprises, in the following order defined by the direction of circulation 3, an evaporator assembly 4, which comprises a plurality of finned heat exchangers, hereinafter referred to as finned coils, designed to absorb heat from the air by evaporation of the refrigerant fluid, a compressor assembly 6 for compressing the refrigerant fluid, a condenser assembly 7, which comprises one or more heat exchangers (not shown) for transferring heat from the refrigerant fluid to a second fluid, in this case water, which circulates in another circuit 8, and a single expansion or throttling valve 9.

In the example shown in the figure, the evaporator assembly 4 comprises four finned coils indicated by 5a, 5b, 5c and 5d, respectively. The expansion valve 9 is connected upstream, relative to the circulation direction 3, of the evaporator assembly 4. The finned coils 5a-5d are connected in parallel to each other at the outlet 9a of the expansion valve 9. Preferably, the expansion valve 9 is an electronic valve.

The heat pump 1 comprises one or more ventilation means 10, each of which is arranged in front of one or more finned coils 5 for forced ventilation of the finned coils 5. In the example illustrated by the figure, the heat pump 1 comprises two ventilation means 10, each of which is arranged in front of a respective pair of finned coils 5a-5b, 5c-5d.

In particular, the finned coils 5a-5d shown in the figure are arranged according to a typical configuration, i.e., they are arranged in a row of pairs, and the finned coils 5a-5d of each pair are arranged in a V-shaped arrangement. Each ventilation means 10 is arranged in the open part of the V-shaped arrangement of the respective pair of finned coils 5a-5b and 5c-5d.

The finned coils 5a-5d are typically arranged inside a parallelepiped-shaped frame 11, open on all its sides. The ventilation means 10 are mounted on the upper side of the frame in order to draw air from below, thus making it pass through the finned coils 5a-5d, and expel it upwards. The two finned coils 5b and 5c, which are the innermost of the row of the four finned coils 5a-5d, define, together with the lower side 12 of the frame 11, a horizontal ventilation channel 13 which limits the air flow to the finned coils 5b and 5c. In other words, the finned coils 5b and 5c receive a lower air flow rate than that received by the finned coils 5a and 5d, which are the most external ones, and therefore the finned coils 5b and 5c will have a lower heat exchange than the finned coils 5b and 5c.

The finned coil 5a is considered hereinafter as the reference coil and therefore the air flow rate received by it is considered as a reference air flow rate. On the other hand, the finned coil 5c is considered as the one receiving the lowest air flow rate and therefore has the lowest heat exchange.

The heat pump 1 comprises a first sensor 14 for measuring the temperature Ta of the refrigerant fluid at the outlet of the finned coil 5a, and at least a second sensor 15 for measuring the temperature Tc of the refrigerant fluid at the outlet of the finned coil 5c. The circuit 2 comprises a control valve 16, which is arranged in series with the finned coil 5c alone, between the latter and the expansion valve 9, i.e., it is directly connected to the inlet of the finned coil 5c. In other words, each finned coil 5a, 5b, 5c, 5d has its respective inlet communicating with the outlet of the expansion valve 9 through a respective supply duct 17a, 17b, 17c, 17d and only the supply duct 17c of the finned coil 5c is provided with the control valve 16. The other supply ducts 17a, 17b and 17d are devoid of flow control valves.

The heat pump 1 comprises an electronic control unit 18 configured to control the control valve 16 as a function of the temperatures Ta and Tc in order to regulate the mass flow of refrigerant fluid in the finned coil 5c.

The control valve 16, for example, consists of an expansion or throttling valve. However, the control valve 16 does not act as an expansion or throttling valve, since it is in series with the expansion valve 9, which has the very purpose of bringing the refrigerant fluid from the liquid phase to the two, liquid and gaseous phases.

In particular, the electronic control unit 18 is configured to control the control valve 16 such that the difference between the temperature Ta and the temperature Tc follows the zero value. In greater detail, the control valve 16 is adjusted to reduce the mass flow rate of refrigerant fluid in the finned coil 5c according to a PID control logic applied to the difference between the temperatures Tc and Ta.

Advantageously, the control valve 16 is an electronic valve. Advantageously, the electronic control unit 18 is the one also used to control the expansion valve 19 according to known methods.

The behaviour of the evaporator assembly 4 in the presence of the control valve 16 is described below, assuming an initial situation in which the control valve 16 is fully open.

The refrigerant fluid at the outlet of the finned coil 5c could be in the gaseous and liquid phases instead of in the superheated steam phase due to the lower heat exchange of the finned coil 5c. This would be reflected in a decrease in the temperature Tc compared to an expected value. As a result, the refrigerant fluid at the outlet of the other finned coils 5a, 5b and 5d could be in an excessively superheated steam phase. This would be reflected in an increase in the temperature Ta compared to an expected value.

Excessive overheating of the refrigerant fluid steam at the outlet of the finned coils 5a, 5b and 5d worsens the heat exchange even for those coils which would not have problems with the air flow received. In particular, the refrigerant fluid in the gaseous and liquid phases is much denser than the refrigerant fluid in the superheated steam phase, and therefore induces lower pressure drops with the same mass flow rate. For this reason, the mass flow rate of refrigerant fluid will undergo a progressive decrease in the finned coils 5a, 5b and 5d and a progressive increase in the finned coil 5c. This self-priming phenomenon gradually worsens the heat exchange of the whole evaporator assembly 4 until it prevents the correct operation of the heat pump 1.

The gradual worsening of the heat exchange of the evaporator assembly 4 would show with an increase in the difference between the temperatures Tc and Ta. The electronic control unit 18 reacts to this temperature difference by commanding the control valve 16 to close and thus progressively reducing the mass flow rate of refrigerant fluid in the finned coil 5c until the difference between the temperatures Tc and Ta is zeroed. In other words, the control valve 16 is closed to such an extent as to generate a concentrated pressure drop such that the finned coil 5c has an overall pressure drop substantially identical to that of the other finned coils 5a, 5b and 5d.

It is observed that the above-described behaviour is correct in the hypothesis that all the finned coils, except for the one to which the control valve 16 is connected in series, have a fully comparable heat exchange. The main advantage of the heat pump 1 described above is therefore that it is possible to compensate for the reduced heat exchange of a single finned coil by using a single control valve arranged in series with said finned coil and adjusting said valve as a function of two measured temperatures.

However, in the example illustrated by the figure, there are two finned coils which could receive a reduced air flow rate, that is not only the finned coil 5c, but also the finned coil 5b. This problem can be solved by means of a further embodiment (not shown) of the present invention, wherein the circuit 2 comprises a further control valve, which is arranged in series with the finned coil 5b only, i.e., the supply duct 17b is provided with the further control valve, in a manner similar to the control valve 16 associated with the finned coil 5c, the heat pump 1 comprises a further sensor for measuring the temperature Tb of the refrigerant fluid at the outlet of the finned coil 5b, and the electronic control unit 18 is also configured for controlling the further control valve as a function of the temperatures Ta and Tb, in a manner similar to the adjustment of the valve 16, but with reference to the finned coil 5b.

However, the aforesaid further embodiment would have the drawback of having a circuit 2 comprising a number of valves (an expansion valve and two control valves) very similar to the known solution which adopts an expansion valve for each finned coil (four expansion valves).

Each of the finned coils 5a-5d comprises a respective heat exchange surface. According to a further embodiment of the invention, the heat exchange surfaces of the finned coils 5a, 5b and 5d each have the same predetermined area, whereas the heat exchange surface of the finned coil 5c, i.e., the one associated with the control valve 16, has an area smaller than said predetermined area, to such an extent as to make the differences in air flow rate between the various finned coils 5a-5d irrelevant to the heat exchange capacity of the same. In this way, it is ensured that the finned coil 5c always has a worse heat exchange compared to the other coils 5a, 5b and 5d and therefore always requires, in every operating condition, a reduction in the flow rate of the refrigerant fluid, which is obtained by controlling the control valve 16 as a function of the temperatures Ta and Tc.

The reduction of the heat exchange surface of a finned coil can be obtained with a lower density of fins per unit of frontal area, the other geometrical parameters being the same, or by blocking a certain percentage of slits between the fins by applying an obstacle on the front side of the finned coil.

Although the invention described above makes particular reference to a very precise embodiment, it is not to be construed as limited to this embodiment, since all the variants, modifications or simplifications covered by the attached claims, such as, for example, an air-air heat pump, i.e., in which the heat exchangers of the condenser assembly 7 also consist of finned coils, fall within its scope.

The main advantage of the heat pump 1 is that, by using a small number of valves (an expansion valve 9 and a control valve 16), it ensures that the refrigerant fluid at the outlet of all the finned coils 5a-5d, when fully operational, is in the superheated steam phase, despite the fact that a finned coil 5a operates with a reduced ventilation air flow rate.

The embodiment providing a finned coil 5c which has a reduced heat exchange surface increases the stability of the heat pump system, since the worse heat exchange of the finned coil 5c decided during the design phase always requires the intervention of the control valve 16 for reducing the flow rate during the operation of the heat pump 1.

## Claims

1. A heat pump comprising: a circuit (2), in which a refrigerant fluid circulates and which comprises a condenser assembly (7), a single expansion valve (9) connected to the outlet of the condenser assembly (7), and an evaporator assembly (4) comprising a plurality of finned coils (5a-5d) connected in parallel to the outlet (9a) of the expansion valve (9) through respective supply ducts (17a-17d); ventilation means (10) for forced ventilation of the finned coils (5a-5d); and electronic control means (18); the plurality of finned coils (5a-5d) comprising at least a first finned coil (5a) designed to receive a reference air flow rate and at least a second finned coil (5c) designed to receive an air flow rate lower than the reference air flow rate; the heat pump (1) **being characterised in that** it comprises: a first sensor (14) for measuring a first temperature (Ta) of the refrigerant fluid at the outlet of the first finned coil (5a); at least a second sensor (15) for measuring a second temperature (Tc) of the refrigerant fluid at the outlet of the second finned coil (5c); the supply duct (17c) of said at least one second finned coil (5c) alone being provided with a respective flow control valve (16); said electronic control means (18) being configured to control the flow control valve (16) as a function of the first temperature (Ta) and the second temperature (Tc).

2. The heat pump according to claim 1, wherein said electronic control means (18) are configured to control the flow control valve (16) such that the difference between the first temperature (Ta) and the second temperature (Tc) follows the zero value.

3. The heat pump according to claim 2, wherein said electronic control means (18) are configured to control said flow control valve (16) according to a PID logic.

4. The heat pump according to any one of claims 1 to 3, wherein said flow control valve (16) is electronic.

5. The heat pump according to any one of claims 1 to 4, wherein each finned coil (5a-5d) of said plurality of finned coils (5a-5d) comprises a respective heat exchange surface; all heat exchange surfaces, except that of said second finned coil (5c), have, each, a same predetermined area and the heat exchange surface of the second finned coil (5c) has an area smaller than said predetermined area.

6. The heat pump according to any one of claims 1 to 5, wherein the finned coils (5a-5d) are arranged in a row of pairs, the finned coils (5a-5b, 5c-5d) of each pair are arranged in a V-shaped arrangement and said ventilation means (10) are arranged in the open part of said V-shaped arrangement; said first finned coil (5a) being one of the finned coils (5a, 5d) at the ends of said row of pairs, and said second finned coil (5c) being one of the innermost finned coils (5b, 5c) of said row of pairs.
